# EUROPÄISCHE PATENTSCHRIFT

(11) **EP 3 713 031 B1**
(45) Veröffentlichungstag und Bekanntmachung des Hinweises auf die Patenterteilung: **29.10.2025**
(21) Anmeldenummer: 20020036.8
(22) Anmeldetag: 22.01.2020
(51) Int. Cl.: H02J 1/06, H02J 7/00

(54) **BORDNETZ FÜR EIN FAHRZEUG SOWIE VERFAHREN ZUR AUSLEGUNG EINER ELEKTRISCHEN LEITUNG EINES BORDNETZES**
VEHICLE ELECTRICAL SYSTEM FOR A VEHICLE AND METHOD FOR DESIGNING AN ELECTRICAL LINE OF AN ELECTRICAL SYSTEM
RÉSEAU DE BORD D'UN VÉHICULE ET MÉTHODE POUR CONCEVOIR UNE LIGNE ÉLECTRIQUE D'UN RÉSEAU DE BORD

(30) Priorität: 21.03.2019 DE 102019203918
(43) Veröffentlichungstag der Anmeldung: 23.09.2020
(73) Patentinhaber: LEONI Bordnetz-Systeme GmbH, 97318 Kitzingen (DE)
(72) Erfinder: Schraud, Bernhard, 97084 Würzburg (DE)
(74) Vertreter: FDST Patentanwälte

(56) Entgegenhaltungen:
- DE-A1- 102011 122 022
- DE-A1- 102013 214 726
- DE-A1- 102013 225 732
- DE-A1- 102017 131 359
- DE-U1- 202005 011 235

## Beschreibung

Die Erfindung betrifft ein Bordnetz für ein Fahrzeug sowie ein Verfahren zur Auslegung einer elektrischen Leitung eines derartigen Bordnetzes.

In Fahrzeugen, insbesondere in Kraftfahrzeugen, erfolgt eine Verteilung von elektrischer Energie mittels eines Bordnetzes. Das Bordnetz weist hierzu üblicherweise mehrere elektrische Leitungen auf, die eine Spannungsquelle, beispielsweise die Fahrzeugbatterie, mit jeweils einer oder mehreren elektrischen Lasten des Fahrzeugs verbinden.

Heutzutage sind in Fahrzeug-Bordnetz die elektrischen Leitungen derart ausgelegt und dimensioniert, dass ein maximaler (vorgegebener) elektrischer Strom im Betrieb des Bordnetzes die elektrischen Leitungen nicht thermisch beschädigt.

Die thermische Belastung der elektrischen Leitungen wird darüber hinaus auch durch beispielsweise eine Umgebungstemperatur der jeweiligen elektrischen Leitung beeinflusst. Die Kraftfahrzeuge und damit auch das Bordnetz sind dabei typischerweise für den Einsatz bei Außentemperaturen über einen Temperaturbereich von z.B. -40°C bis hin zu 85°C oder auch bis hin zu 120°C ausgelegt.

Die DE 20 2005 011 235 U1 zeigt eine Vorrichtung zum Überlastschutz einer Versorgungsleitung für eine elektrische Last in einem Kraftfahrzeug, wobei hier die Versorgungsleitung auf eine Überlast überwacht wird und bei Erkennen auf Überlast ein Trennen der Versorgungsleitung veranlasst wird

Die DE 10 2013 225 732 A1 stellt eine Vorrichtung zur Sicherung von elektrischen Hochvolt-Verbindungen dar, wobei die Sicherung eine Leitungsspule umfasst, die eingerichtet ist, durch einen Leitungsstrom auf der Leitung durchflossen zu werden und dadurch ein Magnetfeld zu erzeugen.

In der DE 10 2013 214 726 A1 wird eine Anordnung zur elektrischen Absicherung einer potentiellen Kurzschlussstrecke in einem Stromnetz mit einem Energiespeicher mit systembedingtem, variablem Quellinnenwiderstand vorgeschlagen.

Die DE 10 2011 122 022 A1 betrifft ein Verfahren zum Betrieb eines elektromotorischen Stellantriebs einer Verstelleinrichtung eines Kraftfahrzeugs, insbesondere Fensterheber.

In der DE 10 2017 131 359 A1 werden eine elektronische Schaltung und ein Verfahren beschrieben.

Um mindestens eine geforderte Betriebsdauer zu erreichen und somit im Gegenzug eine maximale Leitungstemperatur (die sich aus der stromflussbedingten Erwärmung der elektrischen Leitung und der Umgebungstemperatur ergibt) nicht zu überschreiten, werden heutzutage die elektrischen Leitungen vorzugsweise im Hinblick auf ihre Leitungsquerschnitte "überdimensioniert". D.h. die Leitungen weisen einen größeren Leitungsquerschnitt auf, als sie eigentlich bezüglich ihrer maximal zu erwartenden thermischen Belastung aufweisen würden/müssten. Diese Überdimensionierung ist jedoch mit erheblichen Mehrkosten und eine Gewichtszunahme verbunden.

Ausgehend hiervon liegt der Erfindung die Aufgabe zugrunde, ein Bordnetz anzugeben, das kosten- und materialsparend ausgelegt und gefertigt ist.

Die Aufgabe wird erfindungsgemäß gelöst durch ein Bordnetz für ein Fahrzeug mit den Merkmalen des Anspruchs 1.

Vorteilhafte Ausgestaltungen, Weiterbildungen und Varianten in den Gegenstand der Unteransprüche.

Das Bordnetz ist insbesondere für ein Fahrzeug und speziell für ein Kraftfahrzeug ausgebildet und ist dort eingesetzt. Es weist eine Spannungsquelle sowie eine elektrische Last auf. Ein Bedarf für den Betrieb der elektrischen Last hängt hierbei von einer externen Bedingung ab. Weiterhin weist das Bordnetz einen Lastpfad mit einer elektrischen Leitung auf, der die Spannungsquelle mit der elektrischen Last verbindet. Unter der externen Bedingung wird hierbei eine Bedingung außerhalb des Bordnetzes verstanden. Bei dieser externen Bedingung handelt es sich daher nicht um eine Eigenschaft der Last selbst und auch nicht um eine Eigenschaft des Lastpfads.

Zudem weist das Bordnetz ein erstes Schaltelement auf, welches im Lastpfad angeordnet ist. Das erste Schaltelement dient einer Trennung der elektrischen Last von der Spannungsquelle. Der Lastpfad definiert die elektrische Verbindung zwischen Stromquelle und Last und umfasst insbesondere die elektrische Leitung und das erste Schaltelement.

Das Bordnetz ist insgesamt, also standardmäßig für einen (maximalen) Betriebsbereich der externen Bedingung, beispielsweise der Temperatur ausgelegt. D.h. die einzelnen Komponenten des Bordnetzes, z.B. die Leitungen, elektronisches Bauteile, Schalter etc. sind standardmäßig für diesen maximalen Betriebsbereich ausgelegt.

Weiterhin ist ein Arbeitsbereich der externen Bedingung definiert, innerhalb dessen die Funktion der Last sinnvoll ist. D. h. eine Nutzung der elektrischen Last ist lediglich innerhalb des Arbeitsbereiches der externen Bedingung sinnvoll. Dieser Arbeitsbereich ist dabei kleiner als der maximale Betriebsbereich.

Weiterhin ist eine Steuereinheit innerhalb des Bordnetzes angeordnet, welche derart ausgebildet ist, dass ein Zuschalten der Last verhindert ist, wenn die externe Bedingung außerhalb des Arbeitsbereiches liegt. Hierdurch ist sichergestellt, dass die elektrische Last lediglich dann beispielsweise vom Fahrer "abgerufen" werden kann, wenn sich die externe Bedingung innerhalb des Arbeitsbereiches befindet. Der Arbeitsbereich ist ein Teilbereich des maximalen Betriebsbereichs der externen Bedingung, für das standardmäßig Bordnetz ausgelegt ist. Durch diese Maßnahme wird daher ein Teilbereich des Bordnetzes für einen anderen Arbeitsbereich ausgelegt als weitere Teile des Bordnetzes.

Durch das Verhindern des Zuschaltens der Last, wenn die externe Bedingung außerhalb des Arbeitsbereiches liegt, ist eine Optimierung des Bordnetzes im Hinblick auf eine Belastung der elektrischen Leitung erreicht. Die elektrische Last ist also grundsätzlich abgeschaltet, wenn zum Beispiel Umgebungsbedingungen das Zuschalten der elektrischen Last nicht für sinnvoll erscheinen lassen. Ein manuelles Zuschalten wird daher in diesen Zuständen wirksam verhindert. Mit anderen Worten wird somit die Last nicht "unnötig" in Betrieb genommen. Hierdurch ist erreicht, das Bordnetz und insbesondere seine Auslegung hinsichtlich einer Materialeinsparung und somit Kostenreduzierung vorteilhaft auszubilden.

Bevorzugt handelt es sich bei der externen Bedingung um eine externe Temperatur. Dies ist insbesondere die Umgebungstemperatur im Bereich der Last und / oder die Umgebungstemperatur außerhalb des Fahrzeugs oder auch die Temperatur eines Betriebsmittels im Fahrzeug. Der Arbeitsbereich ist hierbei ein vorgegebener Temperaturbereich mit einer oberen Temperaturgrenze, an die sich ein weiterer Arbeitsbereich bis zu einer Maximaltemperatur anschließt. Die obere Temperaturgrenze des vorgegebenen Temperaturbereichs weist beispielsweise einen Wert von oberhalb von 25°C und kleiner gleich 35 °C oder kleiner gleich 40 °C oder kleiner gleich 50°C auf.

Dieser Ausgestaltung liegt der Gedanke zugrunde, dass die elektrische Last somit vorzugsweise dann nicht zuschaltbar ist, wenn die obere Temperaturgrenze erreicht oder überschritten ist. Somit ist auch die durch den Stromfluss durch die elektrische Leitung bedingte maximale Leitungstemperatur begrenzt und die Leitung kann insgesamt geringer dimensioniert werden.

Die Maximaltemperatur ist dabei die Temperatur, die beispielsweise in der Umgebung der Last erreicht werden kann, speziell ist sie eine maximale Umgebungstemperatur außerhalb des Fahrzeugs, und für die das Bordnetz, zumindest in einem Teilbereich ausgelegt ist. Die Maximaltemperatur liegt beispielsweise bei 85°C oder auch darüber, z.B. bei 120°C.

Die Maximaltemperatur ist vorzugsweise um 10° C oder 20° C und insbesondere 30°C oder um 50°C höher ist als die obere Temperaturgrenze. Unter dem weiteren Arbeitsbereich wird hierbei vorzugsweise ein Arbeits- oder Betriebsbereich des Bordnetzes beispielsweise im Hinblick auf eine maximale Auslegungstemperatur (des Bordnetzes) verstanden. Ein Betrieb der elektrischen Last oberhalb der oberen Temperaturgrenze (also innerhalb des weiteren Betriebsbereichs) ist grundsätzlich möglich. Jedoch ist ein Bedarf für einen Betrieb der Last innerhalb des weiteren Betriebsbereichs typischerweise nicht sinnvoll oder erforderlich.

Vorzugsweise ist die obere Temperaturgrenze beispielsweise über die Steuereinheit auch dynamisch anpassbar und wird im Bedarfsfall angepasst, z.B. um einen vorgegeben Wert insbesondere kurzfristig erhöht. Je nach Art der Last kann zumindest ein Notbetrieb der Last erforderlich sein. Ergänzend zur Anhebung der Temperaturgrenze, um also ein Zwangs-abschalten der Last zu vermeiden, wird vorzugsweise noch eine Strombegrenzung vorgesehen. D.h. in diesem besonderen Betriebsfall (Notbetrieb) wird die Last allenfalls mit einem Strom versorgt, der kleiner als ein maximaler Laststrom ist.

Allgemein ist daher gemäß einer zweckdienlichen Weiterbildung der Arbeitsbereich, also speziell der vorgegebene Temperaturbereich, im Betrieb variabel. D. h., je nach Priorität des Verbrauchers, kann der Arbeitsbereich dynamisch angepasst werden, um beispielsweise eine sicherheitsrelevante Funktion im Bedarfsfall weiter zu versorgen und/oder um einen Notbetrieb zu gewährleisten.

Alternativ zu dieser Variabilität ist der Arbeitsbereich fest vorgegeben und im Betrieb des Kraftfahrzeuges, also z.B. nach der Herstellung und Auslieferung, nicht veränderbar.

Die elektrische Leitung weist zweckdienlicherweise einen Leitungsquerschnitt auf, der lediglich für die Versorgung der Last innerhalb des Arbeitsbereiches bei einer maximalen Arbeitstemperatur der Leitung ausgelegt ist. Dieser Ausgestaltung liegt die Überlegung zugrunde, dass die elektrische Last mittels der elektrischen Leitung vorzugsweise lediglich innerhalb des Arbeitsbereiches mit elektrischer Energie versorgt wird (werden muss) und somit die maximale Leitungstemperatur lediglich für diesen Arbeitsbereich ausgelegt werden muss. Unter der maximalen Arbeitstemperatur wird hierbei eine Temperatur verstanden, die sich aus der Außentemperatur in einem Nahbereich der elektrischen Leitung und der strombedingten Erwärmung der elektrischen Leitung zusammensetzt.

Bei der elektrischen Leitung handelt es sich insbesondere um eine einadrige Leitung. Alternativ handelt es sich bei der elektrischen Leitung um eine mehradrige Leitung, wobei jede der Adern die Last versorgt.

Die Auslegung und Berechnung eines Leitungsquerschnitts erfolgt üblicherweise nach Normen oder sonstigen Vorschriften, beispielsweise gemäß VDE 0298. Neben Geometriefaktoren, wie beispielsweise Verlegeart (einadrig, mehradrig), Verlegeort der Leitung, etc. sind entscheidende Faktoren für die Auslegung ein maximaler Versorgungsstrom, der über die Leitung fließen soll, sowie auch die Maximaltemperatur.

Aus den Normen und Vorschriften lassen sich üblicherweise - bei gegebenen Geometriefaktoren und Verlegeorten - für unterschiedliche Leitungsquerschnitte unterschiedliche Strombelastbarkeiten ablesen, und zwar typischerweise für eine definierte Leitungstemperatur bei z.b. 30°C. So beträgt die Strombelastbarkeit einer einadrigen, in der Luft verlegten 0,75mm²-Ader 15 A gemäß der VDE 0298 T4 06/13, Tabelle 11. Für eine 25mm² -Ader ergibt sich eine Strombelastbarkeit von 129 A. Der erforderliche Querschnitt hängt dabei stark von der Umgebungstemperatur ab. Dies wird beispielsweise gemäß der genannten VDE-Norm 0298 T4 06/13, dort Tabelle 17 durch einen Umrechnungsfaktor berücksichtigt. Dieser liegt bei 30°C bei 1,0 und bei 50°C bereits bei 0,71 und bei 65°C bei 0,35.

Durch die erfindungsgemäß vorgenommene Maßnahme, nämlich den Betrieb der Last bei einer bestimmten oberen Temperaturgrenze zu unterbinden, wird daher eine erhebliche Einsparung bei dem Materialbedarf für die Leitungen erreicht, da diese mit deutlich kleineren Querschnitten (im Vergleich zu einer Auslegung für die maximale Betriebstemperatur) ausgebildet werden können.

Der Leitungsquerschnitt der elektrischen Leitung ist somit kleiner als er für die Versorgung der elektrischen Last im weiteren Arbeitsbereich und somit beispielsweise im gesamten Betriebsbereich des Bordnetzes erforderlich wäre - bei ansonsten gleichen Parameter, insbesondere bei ansonsten gleichem Leitungsaufbau (einadrig-mehradrig; Material und Aufbau des Leiters sowie der Aderisolierung). Bevorzugt ist der Leitungsquerschnitt hierbei um zumindest den Faktor 2, vorzugsweise um zumindest den Faktor 5 und insbesondere um zumindest den Faktor 10 kleiner als der Leitungsquerschnitt der für die Versorgung der Last im weiteren Arbeitsbereich (bis zur Maximaltemperatur) erforderlich wäre. Durch die Verringerung des Leitungsquerschnitts ist eine Reduzierung von Leitungsmaterial und somit eine Reduzierung von Kosten und eine Reduzierung von Gewicht erreicht.

Die Einsparungen ergeben sich insbesondere bei Leitungen, die für hohe Strombelastbarkeiten ausgelegt sind und die zur Versorgung von Lasten mit einem hohen Strombedarf vorgesehen sind. Speziell ist die Leitung für eine Strombelastbarkeit von zumindest 30A, vorzugsweise von zumindest 60A und insbesondere auch von zumindest 100A ausgebildet.

Bei der elektrischen Last handelt es sich um ein elektrisches Heizsystem. Das Heizsystem ist im einfachsten Fall ein elektrisches Heizelement. Alternativ weist es zumindest ein solches elektrisches Heizelement auf. Das Heizsystem lässt sich also vorzugsweise insgesamt nicht mehr zuschalten, wenn die externe Bedingung außerhalb des Arbeitsbereiches liegt.

Das Heizsystem bzw. das Heizelement unterstütz gemäß einer ersten Variante eine Komfortfunktion für den Kfz-Insassen, um diesem ein Wärmegefühl zu vermitteln. Das Heizelement ist zur Beheizung einer Fahrgastzelle, eines Fahrzeugsitzes und / oder eines Lenkrades vorgesehen. Vorzugsweise sind für ein oder mehrere oder alle dieser zuvor genannten Komponenten jeweils Heizelemente vorgesehen.

Alternativ oder ergänzend dient das Heizelement gemäß einer zweiten Variante zur Beheizung eines Betriebsstoffes des Fahrzeuges. Unter dem Betriebsstoff des Fahrzeugs wird hierbei insbesondere ein Motoren-und/oder Getriebeöl verstanden.

Bei der als elektrisches Heizelement ausgebildeten elektrischen Last hat sich die temperaturabhängige Abschaltung als besonders vorteilhaft und geeignet erwiesen. So ist beispielsweise davon auszugehen, dass eine Heizfunktion zur Beheizung der Fahrgastzelle bei Umgebungstemperaturen über 30 °C von einem Fahrer nicht verlangt wird. Somit würde in diesem Fall die obere Temperaturgrenze des Arbeitsbereiches bei beispielsweise 30 °C liegen, sodass oberhalb dieser Temperatur ein Zuschalten bzw. die Funktion des Heizelements unterbunden wird.

Als weiteres Beispiel dient hier die bereits erwähnte Funktion des Heizelements, als Heizelement zur Beheizung eines Betriebsstoffes des Fahrzeugs. Hierbei wird entgegen des zuvor genannten Beispiels insbesondere nicht die Außen- oder Umgebungstemperatur des Fahrzeugs als externe Bedingung definiert, sondern vielmehr, beispielsweise eine Motorentemperatur des Fahrzeuges. Wird nun im Betrieb seitens der Messeinrichtung und der Steuereinheit erkannt, dass der Motor beispielsweise betriebswarm ist, so wird eine Funktion des den Betriebsstoff erwärmenden Heizelements unterbunden.

Durch das Unterbinden der elektrischen Last, insbesondere der Funktion des Heizelementes oberhalb einer vorgegebenen Temperaturgrenze ist sichergestellt, dass eine maximale Leitungstemperatur der das Heizelement versorgenden elektrischen Leitung (unter normalen Bedingungen) vorzugsweise nicht erreicht wird. Somit muss die Leitung maximal für einen Betrieb bis zu der vorgegebenen Temperaturgrenze und insbesondere lediglich innerhalb des Arbeitsbereiches ausgelegt werden.

Vorzugsweise weist die elektrische Leitung mehrere Leitungselemente, insbesondere einzelne Adern auf, über die die Last jeweils mit Strom versorgt wird. Die Versorgung der Last wird daher auf mehrere Leitungselemente aufgeteilt. Weiterhin ist in jedem dieser Leitungselemente ein elektronisches Schaltelement, insbesondere ein Halbleiterschalter wie z.B. Transistor, zum Schalten der elektrischen Last angeordnet. Die mehreren elektronischen Schaltelemente definieren daher gemeinsam das erste Schaltelement zum Schalten der Last. Dieser Ausgestaltung liegt die Überlegung zu Grunde, dass bei starken Verbrauchern, wie z.B. bei Heizelementen, durch die Begrenzung des Temperaturbereichs sich zunächst geringere erforderliche Leitungsquerschnitte ergeben. Durch die zusätzliche Aufteilung des Lastpfades auf mehrere Leitungselemente brauchen diese insgesamt lediglich für eine vergleichsweise geringe Strombelastbarkeit ausgelegt zu werden, die dann durch elektronische Schaltelemente schaltbar sind. Ein jedes Schaltelement ist z.B. zum Schalten von Strömen bis zu max. 10A, bis max. 20 A oder bis max. 30 A ausgelegt. Durch diese Maßnahme wird daher - im Vergleich zu bisherigen Systemen - auf den Einsatz eines kostenintensiven Schaltrelais verzichtet, so dass sich auch im Hinblick auf das Schaltelement Kosteneinsparungen ergeben.

So wird beispielsweise durch das hier beschriebene Maßnahmenpaket eine elektrische, einadrige Leitung mit einem Leiterquerschnitt von 25mm² und einem Schaltrelais (zur Versorgung eines Heizelements mit mehreren kW Heizleistung) ersetzt durch eine mehradrige, insbesondere dreiadrige Leitung, wobei jede einzelne Ader lediglich einen Leiterquerschnitt von 1,5mm² aufweist und jeweils mit einem elektronischen Schaltelement geschalten ist. Der Gesamt-Leiterquerschnitt und damit auch das Gesamt-Volumen für das benötigte Leitermaterial haben sich daher in diesem Beispiel um ca. 80% reduziert (Reduzierung von 25 mm² auf insgesamt 4,5 mm²).

Bevorzugt ist das erste Schaltelement zum normalen Zuschalten der Last im Betrieb eingerichtet. Unter dem normalen Zuschalten der Last im Betrieb wird hierbei verstanden, dass der Fahrer beispielsweise während einer Fahrt mittels des ersten Schaltelements die Last ein- oder ausschalten kann. Die Steuereinheit ist weiterhin derart eingerichtet, ein Schalten des ersten Schaltelements zu blockieren, wenn die externe Bedingung außerhalb des Arbeitsbereiches liegt. Hierdurch ist ein zuverlässiges Verhindern des Zuschaltens der Last erreicht, wenn beispielsweise die externe Bedingung die obere Temperaturgrenze erreicht oder überschreitet.

Gemäß einer zweckdienlichen Weiterbildung ist weiterhin ein zweites Schaltelement innerhalb des Bordnetzes angeordnet. Die Steuereinheit ist gemäß dieser Weiterbildung derart eingerichtet, ein Trennen der Last über das zweite Schaltelement zu veranlassen, wenn die externe Bedingung außerhalb des Arbeitsbereiches liegt. Dieser Weiterbildung liegt der Gedanke zugrunde, unabhängig eines Schaltzustandes des ersten Schaltelements mittels des zweiten Schaltelements die elektrische Last zu trennen. Insbesondere ist dies der Fall, wenn beispielsweise seitens des Fahrers die elektrische Last mittels des ersten Schaltelements angeschaltet wurde und nun beispielsweise aufgrund einer Änderung der Umgebungstemperatur die externe Bedingung außerhalb des Arbeitsbereiches liegt. Hier wird nun mittels und durch die Steuereinheit beispielsweise ein Schaltsignal an das zweite Schaltelement übermittelt, sodass die Last von der Spannungsquelle getrennt wird.

Gemäß einer bevorzugten Ausgestaltung ist zumindest das erste Schaltelement in einem Leistungsverteiler angeordnet, an dem die elektrische Leitung angeschlossen ist. Zumindest das erste Schaltelement ist somit in einer sogenannten Vorsicherungsebene angeordnet. Unter der Vorsicherungsebene wird hierbei ein Bereich innerhalb des Bordnetzes verstanden, der sich vorzugsweise in einem Nahbereich der Spannungsquelle befindet und von dem aus die elektrischen Leitungen zu den einzelnen Lasten führen. Der Anordnung der Vorsicherungsebene in einem Nahbereich der Spannungsquelle hat sich insbesondere aus räumlichen und sicherheitstechnischen Gründen als vorteilhaft erwiesen. Üblicherweise ist in dem Leistungsverteiler zusätzlich beispielsweise pro Strompfad ein Sicherungselement angeordnet. Die Anordnung des zumindest ersten Schaltelements in dem Leistungsverteiler hat den Vorteil, dass eine möglichst große Leitungslänge mit dem bereits erwähnten kleineren Leitungsquerschnitt ausgelegt werden kann.

Gemäß einer alternativen Ausgestaltung weist das erste Schaltelement eine integrierte Sicherung auf, beispielsweise nach Art einer Schmelzsicherung zum Absichern der elektrischen Leitung gegen einen Überstrom. Weiterhin alternativ und insbesondere zur Anordnung zumindest des ersten Schaltelements in der Vorsicherungsebene ist das erste Schaltelement vor einer solchen Sicherung in dem Lastpfad angeordnet.

Bevorzugt weist das Bordnetz eine Messeinrichtung zur Erfassung der externen Bedingung auf. Weiterhin bevorzugt ist die Messeinrichtung zum Messen einer aktuellen Temperatur der elektrischen Leitung ausgebildet. Das Messen der aktuellen Temperatur der elektrischen Leitung dient zur Bestimmung der externen Bedingung.

Zweckdienlicherweise ist hierbei die Messeinrichtung derart eingerichtet, die aktuelle Temperatur durch zumindest eine der folgenden Methoden zu ermitteln:
- eine direkte Messung der Temperatur der elektrischen Leitung und/oder
- eine indirekte Messung der aktuellen Betriebstemperatur der elektrischen Leitung mittels des Leitungswiderstands und/oder
- eine Messung der aktuellen Betriebstemperatur in einer Komponente des Bordnetzes.

Die direkte Messung der Temperatur der elektrischen Leitung erfolgt beispielsweise mittels eines Temperatursensors, der vorzugsweise unmittelbar an der zu messenden elektrischen Leitung angeordnet ist. Die indirekte Messung der aktuellen Temperatur der elektrischen Leitung mittels des Leitungswiderstands beruht auf der Überlegung, dass der Leitungswiderstand vorzugsweise mit der Leitungstemperatur proportional korreliert ist. Somit lässt sich gegebenenfalls unter Hinzunahme einer Auswerteeinheit aus dem ermittelten Leitungswiderstand auf die Leitungstemperatur schließen.

Unter der Messung der aktuellen Temperatur in einer Komponente des Bordnetz. Hierbei wird verstanden, dass die Messeinrichtung ein Temperatursignal beispielsweise aus einem Steuergerät des Fahrzeugs erhält, welches wiederum den Temperaturwert beispielsweise von einem innerhalb des Fahrzeugs angeordneten Temperatursensor erhält. Die Übertragung der Temperatursignale an die Messeinrichtung erfolgt beispielsweise über ein BUS-Kommunikationssystem. Weiterhin ergänzend oder alternativ ist es ermöglicht, unter Berücksichtigung von Datum, Standort und oder Jahreszeit auf die Temperatur der elektrischen Leitung zurückzuschließen.

Durch die zuvor genannten Methoden zur Temperaturermittlung ist es zum einen über mehrere Wege und zum anderen jeweils einfach ermöglicht, die Temperatur der elektrischen Leitung zu ermitteln. Somit beschränkt sich die Temperaturermittlung der elektrischen Leitung nicht auf eine Methode und ist somit beispielsweise auf verschiedene Bordnetz-Typen und/oder Fahrzeugtypen anwendbar, bei denen sich beispielsweise jeweils unterschiedliche Temperaturerfassungsmethoden als (insbesondere aus technischer Sicht) geeignet erwiesen haben.

Die Aufgabe wird erfindungsgemäß weiterhin gelöst durch ein Verfahren zur Auslegung einer elektrischen Leitung eines Bordnetzes es mit den Merkmalen des Anspruchs 19.

Bei dem Bordnetz handelt es sich insbesondere um das bereits vorstehend beschriebene Bordnetz, welches eine Spannungsquelle sowie eine elektrische Last, einen Lastpfad mit einer elektrischen Leitung sowie ein erstes Schaltelement aufweist. In einem ersten Schritt des Verfahrens wird ein Arbeitsbereich der externen Bedingung, vorzugsweise der externen Temperatur und des Arbeitsbereiches definiert, innerhalb dessen die Funktion der Last sinnvoll ist. In einem zweiten Verfahrensschritt wird dann ein Leitungsquerschnitt der Leitung in Abhängigkeit des definierten Arbeitsbereiches ermittelt, sodass die elektrische Leitung im Hinblick auf den Leitungsquerschnitt für insbesondere einen Betrieb innerhalb des Arbeitsbereiches ausgelegt ist.

Die im Hinblick auf das Bordnetz aufgeführten Vorteile und bevorzugten Ausgestaltungen sind sinngemäß auf das Verfahren zu übertragen und umgekehrt.

Ausführungsbeispiele der Erfindung werden nachfolgend anhand der Figuren näher erläutert. Diese zeigen in teilweise stark vereinfachten Darstellungen:
- Fig. 1: ein Bordnetz eines Kraftfahrzeuges gemäß einer ersten Ausgestaltungsvariante sowie
- Fig. 2: das Bordnetz des Kraftfahrzeuges gemäß einer zweiten Ausgestaltungsvariante.

In den Figuren sind gleichwirkende Teile stets mit den gleichen Bezugszeichen dargestellt.

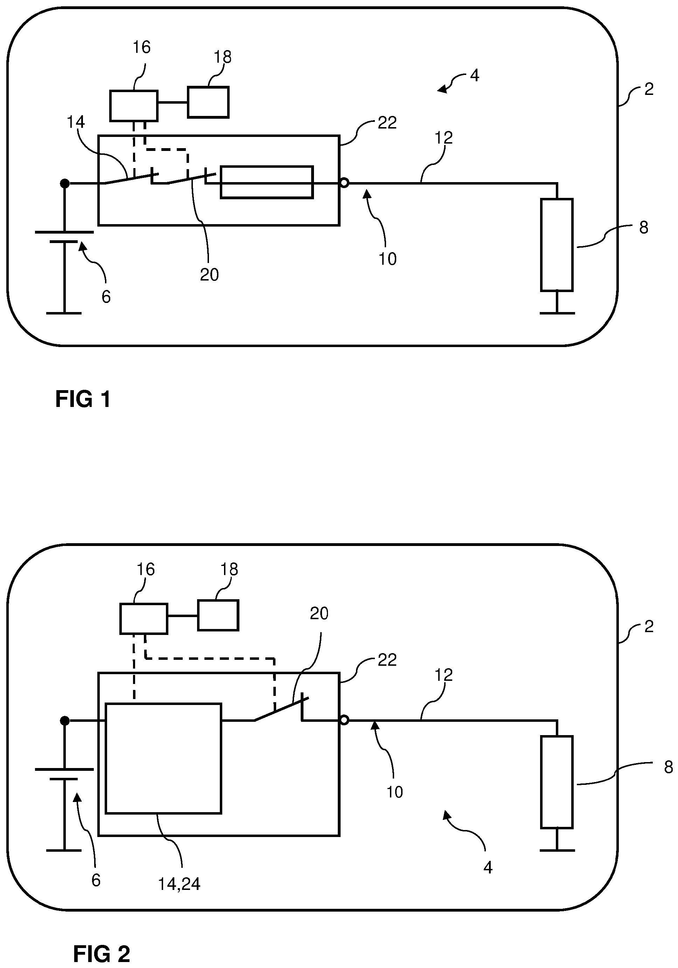

In Fig. 1 ist ein lediglich angedeutet dargestelltes Fahrzeug 2 mit einem Bordnetz 4 gemäß einer ersten Ausgestaltungsvariante dargestellt. Bei dem Fahrzeug 2 handelt es sich insbesondere um ein Kraftfahrzeug. Das Bordnetz 4 weist eine Spannungsquelle 6 sowie eine elektrische Last 8 auf. Bei der elektrischen Last 8 handelt es sich im Ausführungsbeispiel um ein elektrisches Heizelement, welches insbesondere ein Heizelement zur Beheizung einer Fahrgastzelle oder ein Heizelement zur Beheizung eines Betriebsstoffes des Fahrzeugs 2 ist. Ein Bedarf für die elektrische Last 8 hängt von einer externen Bedingung ab. Unter der externen Bedingung wird hierbei eine Bedingung für den Bedarf der elektrischen Last verstanden, der insbesondere keine Eigenschaft der Last selbst ist.

Das Bordnetz 4 weist weiterhin einen Lastpfad 10 mit einer elektrischen Leitung 12 auf, der die Spannungsquelle 6 mit der elektrischen Last 8 verbindet.

Im Ausführungsbeispiel gemäß Fig. 1 weist das Bordnetz 4 ein erstes Schaltelement 14 auf, welches im Lastpfad 10 angeordnet ist. Das erste Schaltelement 14 dient einer Trennung der elektrischen Last 8 von der Spannungsquelle 6. Das erste Schaltelement 14 ist insbesondere zum normalen Zuschalten der Last 8 im Betrieb eingerichtet. D.h. es ist vorzugsweise von einem Fahrer des Fahrzeuges 2 bedienbar.

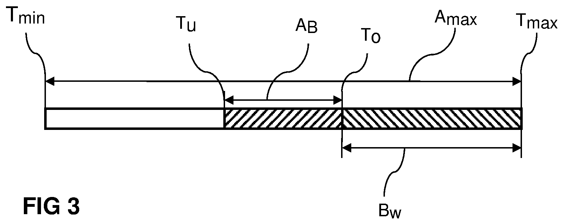

Weiterhin ist ein Arbeitsbereich A_{B} (vgl. Fig. 3) der externen Bedingung definiert, innerhalb dessen eine Funktion der elektrischen Last 8 sinnvoll ist.

Das Bordnetz 4 weist weiterhin eine Steuereinheit 16 auf, die derart ausgebildet ist, dass ein Zuschalten der elektrischen Last 8 verhindert ist, wenn die externe Bedingung außerhalb des Arbeitsbereiches liegt und somit eine Funktion und insbesondere ein Betreiben der Funktion der elektrischen Last 8 nicht sinnvoll ist.

Im Ausführungsbeispiel gemäß Fig. 1 handelt es sich bei der externen Bedingung um eine externe Temperatur. Der Arbeitsbereich A_{B} ist hierbei ein vorgegebener Temperaturbereich mit einer oberen Temperaturgrenze Tₒ, an die sich ein weiterer Arbeitsbereich B_{w} anschließt (vgl. Fig. 3).

Zur Erfassung der externen Bedingung weist das Bordnetz 4 eine Messeinrichtung 18 auf. Die Messeinrichtung 18 ist im Ausführungsbeispiel mit der Steuereinheit 16 elektrisch verbunden. Hierdurch ist es ermöglicht, dass die Messeinrichtung 18 beispielsweise nach einer Erfassung der externen Bedingung, also der externen Temperatur, ein Signal an die Steuereinheit 16 übermittelt, welches eine Information über die erfasste externe Temperatur enthält. Auf Basis des erhaltenen Signals mit der Temperaturinformation erfolgt beispielsweise anschließend mittels der Steuereinheit 16 eine Prüfung dahingehend, ob die externe Bedingung, also die erfasste externe Temperatur außerhalb des (vorgegebenen) Arbeitsbereiches liegt. Sofern die externe Bedingung außerhalb des Arbeitsbereiches liegt, wird seitens der Steuereinheit 16 ein Zuschalten der Last 8 verhindert. Hierzu ist die Steuereinheit 16 mit dem ersten Schaltelement 14 derart elektrisch verbunden, dass die Steuereinheit 16 z.B. ein Schaltsignal an das erste Schaltelement 14 übermittelt, auf Basis dessen ein Zuschalten der elektrischen Last 8 verhindert ist.

Durch das Verhindern des Zuschaltens der elektrischen Last 8 mittels des ersten Schaltelements 14 bzw. dem Trennen der elektrischen Last 8 über das zweite Schaltelement 20, wenn die externe Bedingung außerhalb des Arbeitsbereiches liegt ist der Vorteil erreicht, dass insbesondere bei einer Heranziehung der externen Temperatur als externe Bedingung eine geringere Temperaturbelastung der elektrischen Leitung 12 im Betrieb erreicht ist. Hierdurch ist es ermöglicht, einen Leitungsquerschnitt der elektrischen Leitung 12 für einen geringeren Temperaturbereich und somit für eine geringere auftretende Maximaltemperatur auszulegen und somit Material und Kosten zu sparen.

Weiterhin ist in dem Bordnetz 4 ein zweites Schaltelement 20 angeordnet. Die Steuereinheit 16 ist ebenfalls derart eingerichtet, ein Trennen der elektrischen Last 8 über das zweite Schaltelement 20 zu veranlassen, wenn die externe Bedingung außerhalb des Arbeitsbereiches liegt. Dieser Ausgestaltung liegt insbesondere der Gedanke zugrunde, dass nicht nur ein Zuschalten der elektrischen Last 8 verhindert werden soll, sondern auch die elektrische Last 8 abgeschaltet werden soll, wenn beispielsweise im Betrieb die externe Bedingung außerhalb des Arbeitsbereiches liegt.

Das zweite Schaltelement 20 ist hierzu im Ausführungsbeispiel seriell zum ersten Schaltelement 14 angeordnet. In einem Normalbetrieb des Bordnetzes 4 und insbesondere der elektrischen Last 8 befindet sich das zweite Schaltelement 20 in einem geschlossenen, also leitenden Zustand. Das Verhindern des Zuschaltens der elektrischen Last 8 wird somit vorzugsweise über das erste Schaltelement 14 realisiert. Erst wenn dieses beispielsweise durch einen Fahrer des Fahrzeuges 2 (normal) zugeschaltet wurde und die externe Bedingung außerhalb des Arbeitsbereiches liegt, öffnet sich das zweite Schaltelement 20 und trennt somit die elektrische Last 8 von der Spannungsquelle 6. Das zweite Schaltelement 20 ist ebenfalls elektrisch mit der Steuereinheit 16 verbunden.

Im Ausführungsbeispiel gemäß Fig. 1 ist das erste Schaltelement 14 und das zweite Schaltelement 20 in einem Leistungsverteiler 22 angeordnet. An dem Leistungsverteiler 22 ist die elektrische Leitung 12 angeschlossen.

Durch die Anordnung des ersten Schaltelements 14 und des zweiten Schaltelements 20 in dem Leistungsverteiler 22 es ermöglicht, eine möglichst große Länge der elektrischen Leitung 12 mit dem verringerten Leitungsquerschnitt auszubilden. Der Kosten- und Materialvorteil ist diesbezüglich vorteilhaft beeinflusst. Dieser Ausgestaltung liegt der Gedanke zugrunde, dass derartige Leistungsverteiler 22 üblicherweise in einem Nahbereich der Spannungsquelle 6, beispielsweise der Fahrzeugbatterie angeordnet sind und somit ein Großteil der elektrischen Leitung 12 für eine geringere Querschnittsauslegung "zur Verfügung" steht.

Im Ausführungsbeispiel gemäß Fig. 1 ist weiterhin eine Sicherung 24 in dem Leistungsverteiler 22 angeordnet. Die Sicherung dient einer Absicherung der elektrischen Leitung 12 gegen einen Überstrom. Im Ausführungsbeispiel gemäß Fig. 1 ist die Sicherung 24 seriell zum zweiten Schaltelement 20 angeordnet. Die Sicherung 24 ist also (örtlich betrachtet) zwischen dem zweiten Schaltelement 20 und der elektrischen Last 8 angeordnet. Bei der Sicherung 24 handelt es sich beispielsweise um eine herkömmliche Schmelzsicherung. Das erste Schaltelement 14 und das zweite Schaltelement 20 sind im Ausführungsbeispiel also in einer sogenannten Vorsicherungsebene angeordnet.

Alternativ ist lediglich eins oder zwei, der Bauteile ausgewählt aus erstem Schaltelement 14, zweitem Schaltelement 20 und Sicherung 24 in dem Leistungsverteiler 22 angeordnet.

Fig. 2 zeigt ein Bordnetz 4 eines Fahrzeuges 2 gemäß einer zweiten Ausgestaltungsvariante.

Das Bordnetz 4 weist im Wesentlichen die gleichen Komponenten auf, wie das Bordnetz 4 gemäß der ersten Ausgestaltungsvariante gemäß Fig. 1. So weist das Bordnetz 4 eine Spannungsquelle 6 sowie eine elektrische Last 8 auf, wobei der Bedarf für die elektrische Last 8 ebenfalls von einer externen Bedingung abhängt.

Zudem weist das Bordnetz 4 einen Lastpfad 10 mit einer elektrischen Leitung 12 auf, der die Spannungsquelle 6 mit der elektrischen Last 8 verbindet.

Das Bordnetz 4 gemäß der zweiten Ausgestaltungsvariante weist ebenfalls ein erstes Schaltelement 14 auf, welches im Lastpfad angeordnet ist und zur Trennung der elektrischen Last 8 von der Spannungsquelle 6 ausgebildet ist. Im zweiten Ausführungsbeispiel gemäß Fig. 2 weist das erste Schaltelement 14 jedoch eine Sicherung 24 auf, d.h. die Sicherung 24 ist in dem ersten Schaltelement 14 integriert. Die Sicherung 24 wird aufgrund dessen auch als eine integrierte Sicherung 24 bezeichnet.

Das erste Schaltelement 14 erhält - analog zu dem ersten Ausgestaltungsbeispiel gemäß Fig. 1 - Schaltsignale einer Steuereinheit 16, die ebenfalls innerhalb des Bordnetzes 4 angeordnet ist und mit dem ersten Schaltelement 14 elektrisch verbunden ist.

Weiterhin weist das Bordnetz 4 gemäß Fig. 2 ein zweites Schaltelement 20 auf, welches derart ausgebildet ist, die elektrische Last 8 von der Spannungsquelle 6 zu trennen, wenn die externe Bedingung außerhalb des Arbeitsbereiches A_{B} liegt.

Die Erfassung der externen Bedingung, hier der externen Temperatur erfolgt in der Ausgestaltungsvariante gemäß Fig. 2 mittels einer Messeinrichtung 18, die innerhalb des Bordnetzes 4 angeordnet ist und mit der Steuereinheit 16 elektrisch verbunden ist.

Im Ausführungsbeispiel gemäß Fig. 2 sind das zweite Schaltelement 20 und das aus dem ersten Schaltelement 14 und der Sicherung 24 ausgebildete Bauteil gemeinsam in einem Leistungsverteiler 22 angeordnet.

In Fig. 3 ist eine skizzierte Darstellung eines Betriebsbereiches Aₘₐₓ des Bordnetzes 4 dargestellt. Unter dem Betriebsbereich Aₘₐₓ ist ein maximaler Betriebsbereich des Bordnetzes 4, insbesondere ein maximaler Temperatur- Betriebsbereich Aₘₐₓ des Bordnetzes 4 zu verstehen. D. h. der maximale Betriebsbereich Aₘₐₓ gemäß Fig. 3 gibt an, von welcher Mindestauslegungstemperatur Tₘᵢₙ bis zu welcher Maximalauslegungstemperatur Tₘₐₓ die Lastpfade 10 und insbesondere die Leitungsquerschnitte der Lastpfade 10 des Bordnetzes 4 ausgelegt sind. Mit anderen Worten müssen die elektrischen Leitungen 12 hinsichtlich ihres Leitungsquerschnittes derart ausgelegt sein, dass sie während eines Betriebs innerhalb des Betriebsbereiches Aₘₐₓ nicht thermisch beschädigt werden.

Der Betriebsbereich Aₘₐₓ des Bordnetzes 4 weist einen Arbeitsbereich A_{B} mit einer unteren Temperaturgrenze Tᵤ und einer oberen Temperaturgrenze Tₒ auf. Alternativ kann auf die untere Temperaturgrenze Tᵤ verzichtet werden. In diesem Fall ist die untere Temperaturgrenze Tᵤ die Mindestauslegungstemperatur Tₘᵢₙ. Der Arbeitsbereich A_{B} beschreibt einen üblicherweise sinnvollen Temperaturbereich für das Zuschalten der jeweils mit dem entsprechenden Lastpfad 10 mit der Spannungsquelle 6 verbundenen elektrischen Last 8. D. h., innerhalb des Arbeitsbereiches A_{B} scheint ein Zuschalten sowie insgesamt ein Betrieb der Funktion der elektrischen Last 8 für beispielsweise einen Fahrer des Fahrzeuges 2 als sinnvoll.

An die obere Temperaturgrenze Tₒ schließt sich ein weiterer Arbeitsbereich B_{w} an, innerhalb dessen grundsätzlich ein Betrieb der elektrischen Last 8 möglich ist, jedoch aus Sicht des Fahrers des Fahrzeuges 2 nicht mehr als sinnvoll erscheint. Beispielsweise erscheint ein Zuschalten bzw. ein Betrieb, der als elektrisches Heizelement ausgebildeten elektrischen Last 8 zur Beheizung eines Innenraums des Fahrzeuges 2 oberhalb einer bestimmten Temperatur, beispielsweise oberhalb von 40 °C als nicht sinnvoll oder gar von dem Fahrer des Fahrzeuges 2 gewollt. Die 40 °C des vorstehend beschriebenen Beispiels entsprechen hierbei der oberen Temperaturgrenze Tₒ.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

### Bezugszeichenliste

- 2: Fahrzeug
- 4: Bordnetz
- 6: Spannungsquelle
- 8: elektrische Last
- 10: Lastpfad
- 12: elektrische Leitung
- 14: erstes Schaltelement
- 16: Steuereinheit
- 18: Messeinrichtung
- 20: zweites Schaltelement
- 22: Leistungsverteiler
- 24: Sicherung

- A_{B}: Arbeitsbereich
- Aₘₐₓ: (maximaler) Betriebsbereich
- Tₘᵢₙ: Mindestauslegungstemperatur
- Tₘₐₓ: Maximalauslegungstemperatur
- Tᵤ: untere Temperaturgrenze
- Tₒ: obere Temperaturgrenze
- B_{w}: weiterer Arbeitsbereich

## Patentansprüche

1. Bordnetz (4) für ein Fahrzeug (2), welches mindestens eine Spannungsquelle (6) sowie mindestens eine elektrische Last (8), einen Lastpfad (10) mit mindestens einer elektrischen Leitung (12), der die Spannungsquelle (6) mit der elektrischen Last (8) verbindet sowie ein erstes Schaltelement (14), welches im Lastpfad (10) angeordnet ist, zur Trennung der elektrischen Last (8) von der Spannungsquelle (6) aufweist,
**dadurch gekennzeichnet, dass**
- ein Arbeitsbereich (A_{B}) einer externen Bedingung definiert ist, welcher kleiner als ein maximaler Betriebsbereich (Aₘₐₓ) der externen Bedingung ist und das Bordnetz (4) für den maximalen Betriebsbereich (Aₘₐₓ) der externen Bedingung ausgelegt ist, wobei es sich bei der externen Bedingung um eine Bedingung außerhalb des Bordnetzes handelt, also nicht um eine Eigenschaft der Last (8) selbst und auch nicht um eine Eigenschaft des Lastpfads (12),
- eine Steuereinheit (16) angeordnet ist, welche derart ausgebildet ist, dass ein Zuschalten der elektrischen Last (8) verhindert ist, wenn eine externe Bedingung außerhalb des Arbeitsbereiches (A_{B}) liegt,
- ein Bedarf für den Betrieb der elektrischen Last (8) von der externen Bedingung außerhalb des Bordnetzes abhängt,
- es sich bei der elektrischen Last (8) um ein elektrisches Heizelement handelt, welches zur Beheizung, einer Fahrgastzelle, eines Fahrzeugsitzes, eines Lenkrades und / oder eines Betriebsstoffes des Fahrzeugs (2) dient.

2. Bordnetz (4) nach dem vorhergehenden Anspruch,
wobei es sich bei der externen Bedingung um eine externe Temperatur handelt und der Arbeitsbereich (A_{B}) ein vorgegebener Temperaturbereich mit einer oberen Temperaturgrenze (Tₒ) ist, an die sich ein weiterer Arbeitsbereich (B_{w}) bis zu einer Maximaltemperatur (Tₘₐₓ) anschließt.

3. Bordnetz (4) nach dem vorhergehenden Anspruch,
bei dem die obere Temperaturgrenze (Tₒ) im Bedarfsfall dynamisch angepasst wird.

4. Bordnetz (4) nach einem der vorhergehenden Ansprüche,
bei dem der Unterschied zwischen der oberen Temperaturgrenze (Tₒ) und der Maximaltemperatur zumindest 30°C, vorzugsweise zumindest 50°C beträgt.

5. Bordnetz (4) nach einem der vorhergehenden Ansprüche,
bei dem die Maximaltemperatur bei zumindest 80°C und insbesondere bei zumindest 100°C oder bei zumindest 120°C liegt.

6. Bordnetz (4) nach einem der vorhergehenden Ansprüche,
wobei die elektrische Leitung (12) einen Leitungsquerschnitt aufweist, der lediglich für die Versorgung der Last (8) innerhalb des Arbeitsbereichs (A_{B}) ausgelegt ist.

7. Bordnetz (4) nach dem vorhergehenden Anspruch,
bei dem der Leitungsquerschnitt um zumindest den Faktor 2 und vorzugsweise um zumindest den Faktor 10 geringer ist als ein herkömmlicher Leitungsquerschnitt, welcher sich bei einer Auslegung für die Maximaltemperatur ergeben würde.

8. Bordnetz (4) nach einem der vorhergehenden Ansprüche,
wobei die elektrische Leitung (12) für eine Strombelastbarkeit von zumindest 30A, vorzugsweise von zumindest 60A und weiter vorzugsweise von zumindest 100A ausgebildet ist.

9. Bordnetz (4) nach einem der vorhergehenden Ansprüche,
wobei es sich bei der elektrischen Last (8) um ein PTC-Heizelement handelt.

10. Bordnetz (4) nach einem der vorhergehenden Ansprüche,
wobei die elektrische Leitung (12) mehrere Versorgungsadern aufweist, und in jeder Versorgungsader jeweils ein elektronisches Schaltelement zum Schalten der elektrischen Last (8) angeordnet ist.

11. Bordnetz (4) nach einem der vorhergehenden Ansprüche,
wobei das erste Schaltelement (14) zum normalen Zuschalten der Last (8) im Betrieb eingerichtet ist und die Steuereinheit (16) derart eingerichtet ist, ein Schalten des ersten Schaltelements (14) zu blockieren, wenn die externe Bedingung außerhalb des Arbeitsbereichs (A_{B}) liegt.

12. Bordnetz (4) nach einem der vorhergehenden Ansprüche,
wobei weiterhin ein zweites Schaltelement (20) angeordnet ist und die Steuereinheit (16) derart eingerichtet ist, ein Trennen der Last (8) über das zweite Schaltelement (20) zu veranlassen, wenn die externe Bedingung außerhalb des Arbeitsbereichs (A_{B}) liegt.

13. Bordnetz (4) nach einem der vorhergehenden Ansprüche,
wobei zumindest das erste Schaltelement (14) in einem Leistungsverteiler (22) angeordnet ist, an dem die elektrische Leitung (12) angeschlossen ist.

14. Bordnetz (4) nach einem der vorhergehenden Ansprüche,
wobei das erste Schaltelement (14) eine integrierte Sicherung (24) zum Absichern der elektrischen Leitung (12) gegen Überstrom aufweist oder vor einer solchen Sicherung (24) in dem Lastpfad (10) angeordnet ist.

15. Bordnetz (4) nach einem der vorhergehenden Ansprüche,
welches eine Messeinrichtung (18) zur Erfassung der externen Bedingung aufweist.

16. Bordnetz (4) nach dem vorhergehenden Anspruch,
wobei die Messeinrichtung (18) zum Messen einer aktuellen Temperatur der elektrischen Leitung (12) zur Bestimmung der externen Bedingung ausgebildet ist.

17. Bordnetz (4) nach dem vorhergehenden Anspruch,
wobei die Messeinrichtung (18) derart eingerichtet ist, die aktuelle Temperatur durch zumindest eine der folgenden Methoden zu ermitteln:
- eine direkte Messung der Temperatur der elektrischen Leitung (12) und/oder
- eine indirekte Messung der aktuellen Temperatur der elektrischen Leitung (12) mittels des Leitungswiderstands,
- eine Messung der aktuellen Temperatur in einer Komponente des Bordnetzes (4).

18. Verfahren zur Auslegung einer elektrischen Leitung (12) eines Bordnetzes (4) für ein Fahrzeug (2), wobei das Bordnetz aufweist:
- eine Spannungsquelle (6) sowie eine elektrische Last (8), ,
- einen Lastpfad (10) mit einer elektrischen Leitung (12), der die Spannungsquelle (6) mit der elektrischen Last (8) verbindet sowie
- ein erstes Schaltelement (14), welches im Lastpfad (10) angeordnet ist, zur Trennung der elektrischen Last (8) von der Spannungsquelle (6), **dadurch gekennzeichnet, dass**
- ein Arbeitsbereich (A_{B}) einer externen Bedingung definiert wird, wobei das Bordnetz des Fahrzeugs für einen maximalen Betriebsbereich (Aₘₐₓ) der externen Bedingung ausgelegt ist, welcher größer als der Arbeitsbereich (A_{B}) ist, wobei es sich bei der externen Bedingung um eine Bedingung außerhalb des Bordnetzes handelt, also nicht um eine Eigenschaft der Last (8) selbst und auch nicht um eine Eigenschaft des Lastpfads (12),
- ein Leitungsquerschnitt der Leitung (12) in Abhängigkeit des Arbeitsbereiches (A_{B}) ermittelt wird, sodass die elektrische Leitung (8) im Hinblick auf den Leitungsquerschnitt lediglich für einen Betrieb innerhalb des Arbeitsbereiches (A_{B}) und nicht innerhalb des maximalen Betriebsbereichs (Aₘₐₓ) ausgelegt wird,
- ein Bedarf für die elektrische Last (8) von der externen Bedingung außerhalb des Bordnetzes abhängt,
- es sich bei der elektrischen Last (8) um ein elektrisches Heizelement handelt, welches zur Beheizung, einer Fahrgastzelle, eines Fahrzeugsitzes, eines Lenkrades oder eines Betriebsstoffes des Fahrzeugs (2) dient.

19. Verfahren nach dem vorhergehenden Anspruch,
bei dem es sich bei der externen Bedingung um eine externe Temperatur handelt und der Arbeitsbereich ein vorgegebener Temperaturbereich mit einer oberen Temperaturgrenze (Tₒ) ist, an die sich ein weiterer Arbeitsbereich (B_{w}) anschließt) und wobei der Leitungsquerschnitt für den weiteren Arbeitsbereich (B_{w}) unterdimensioniert ist.

## Claims

1. On-board network (4) for a vehicle (2), which has at least one voltage source (6), as well as at least one electrical load (8), a load path (10) with at least one electrical line (12), which connects the voltage source (6) to the electrical load (8), as well as a first switching element (14), which is disposed in the load path (10), for separating the electrical load (8) from the voltage source (6),
**characterized in that**
- a working range (A_{B}) of an external condition is defined, which is smaller than a maximum operating range (Aₘₐₓ) of the external condition and the on-board network (4) is configured for the maximum operating range (Aₘₐₓ) of the external condition, wherein the external condition is a condition outside the on-board network, meaning, it is not a property of the load (8) itself nor a property of the load path (12),
- a control unit (16) is disposed, which is configured such that switching on of the electrical load (8) is prevented when an external condition is outside the working range (As),
- a need for the operation of the electric load (8) depends on the external condition outside the on-board network,
- the electrical load (8) is an electrical heating element, which is used for heating a passenger compartment, a vehicle seat, a steering wheel and/or a fuel of the vehicle (2).

2. The on-board network (4) according to the preceding claim,
wherein the external condition is an outside temperature and the working range (A_{B}) is a predefined temperature range with an upper temperature limit (Tₒ), which is followed by another working range (B_{w}) up to a maximum temperature (Tₘₐₓ).

3. The on-board network (4) according to the preceding claim,
wherein the upper temperature limit (Tₒ) is dynamically adapted, if necessary.

4. The on-board network (4) according to any one of the preceding claims,
wherein the difference between the upper temperature limit (Tₒ) and the maximum temperature is at least 30°C, preferably at least 50°C.

5. The on-board network (4) according to any one of the preceding claims,
wherein the maximum temperature is at least 80°C, and in particular at least 100°C or at least 120°C.

6. The on-board network (4) according to any one of the preceding claims,
wherein the electrical line (12) has a line cross-section, which is configured solely for supplying the load (8) within the working range (As).

7. The on-board network (4) according to the preceding claim,
wherein the line cross-section is at least a factor of 2 and preferably at least a factor of 10 smaller than a conventional line cross-section that would result from a configuration for the maximum temperature.

8. The on-board network (4) according to any one of the preceding claims,
wherein the electrical line (12) is configured for a permissible current load of at least 30 A, preferably at least 60 A, and more preferably at least 100 A.

9. The on-board network (4) according to any one of the preceding claims,
wherein the electric load (8) is a PTC heating element.

10. The on-board network (4) according to any one of the preceding claims,
wherein the electrical line (12) has several power supply wires, and in each power supply wire is respectively an electronic switching element disposed for switching the electric load (8).

11. The on-board network (4) according to any one of the preceding claims,
wherein the first switching element (14) is intended for normal switching of the load (8) in operation and the control unit (16) is intended such to block switching of the first switching element (14), when the external condition is outside the working range (As).

12. The on-board network (4) according to any one of the preceding claims,
wherein further a second switching element (20) is disposed and the control unit (16) is configured such to cause a separation of the load (8) via the second switching element (20), when the external condition is outside the working range (As).

13. The on-board network (4) according to any one of the preceding claims,
wherein at least the first switching element (14) is disposed in a power distributor (22) to which the electrical line (12) is connected.

14. The on-board network (4) according to any one of the preceding claims,
wherein the first switching element (14) has an integrated fuse (24) for protecting the electrical line (12) against overcurrents or is disposed before such a fuse (24) in the load path (10).

15. The on-board network (4) according to any one of the preceding claims,
which has a measuring device (18) for detecting the external condition.

16. The on-board network (4) according to the preceding claim,
wherein the measuring device (18) is configured such to measure a current temperature of the electrical line (12) for the purpose of determining the external condition.

17. The on-board network (4) according to the preceding claim,
wherein the measuring device (18) is configured such to determine the current temperature by at least one of the following methods:
- a direct measurement of the temperature of the electrical line (12) and/or
- an indirect measurement of the current temperature of the electrical line (12) by means of the line resistance,
- a measurement of the current temperature in a component of the on-board network (4).

18. Method for configuring an electrical line (12) of an on-board network (4) for a vehicle (2), wherein the on-board network has:
- a voltage source (6), as well as an electrical load (8),
- a load path (10) with an electrical line (12) which connects the voltage source (6) to the electrical load (8), as well as
- a first switching element (14), which is disposed in the load path (10), for separating the electrical load (8) from the voltage source (6),
**characterized in that**
- a working range (A_{B}) of an external condition is defined, wherein the on-board network of the vehicle is configured for a maximum operating range (Aₘₐₓ) of the external condition, which is greater than the working range (As), wherein the external condition is a condition outside the on-board network, meaning, it is not a property of the load (8) itself nor a property of the load path (12),
- a line cross-section of the line (12) is determined as a function of the working range (As), such that the electrical line (8) is configured, with regard to the line cross-section, only for operation within the working range (A_{B}) and not within the maximum operating range (Aₘₐₓ),
- a need for the electrical load (8) depends on the external condition outside the on-board network,
- the electrical load (8) it is an electrical heating element, which is used for heating a passenger compartment, a vehicle seat, a steering wheel or a fuel of the vehicle (2).

19. The method according to the preceding claim,
wherein the external condition is an outside temperature and the working range is a predefined temperature range with an upper temperature limit (Tₒ), which is followed by another working range (B_{w}) and wherein the line cross-section for the other working range (B_{w}) is undersized.

## Revendications

1. Réseau de bord (4) pour un véhicule (2), qui
comporte au moins une source de tension (6) ainsi qu'au moins une charge électrique (8), un chemin de charge (10) avec au moins une ligne électrique (12), qui relie la source de tension (6) à la charge électrique (8) ainsi qu'un premier élément de commutation (14), qui est disposé dans le chemin de charge (10), destiné à la séparation de la charge électrique (8) d'avec la source de tension (6), **caractérisé en ce que**
- une plage de travail (A_{B}) d'une condition externe est définie, laquelle est inférieure à une plage de fonctionnement maximale (Aₘₐₓ) de la condition externe et le réseau de bord (4) est conçu pour la plage de fonctionnement maximale (Aₘₐₓ) de la condition externe, la condition externe étant une condition en dehors du réseau de bord, c'est-à-dire qu'il ne s'agit pas d'une propriété de la charge (8) elle-même ni d'une propriété du chemin de charge (12),
- une unité de commande (16) est disposée, laquelle est configurée de façon telle qu'une mise en circuit de la charge électrique (8) est empêchée lorsqu'une condition externe se situe en dehors de la plage de travail (A_{B}),
- un besoin pour le fonctionnement de la charge électrique (8) dépend de la condition externe en dehors du réseau de bord,
- pour ce qui est de la charge électrique (8) il s'agit d'un élément chauffant électrique qui sert au chauffage d'un habitacle, d'un siège de véhicule, d'un volant et / ou d'un carburant du véhicule (2).

2. Réseau de bord (4) selon la revendication précédente,
dans lequel pour ce qui est de la condition externe il s'agit d'une température extérieure et la plage de travail (A_{B}) est une plage de température prédéfinie avec une limite de température supérieure (Tₒ), à laquelle fait suite une autre plage de travail (B_{w}) jusqu'à une température maximale (Tₘₐₓ).

3. Réseau de bord (4) selon la revendication précédente,
dans lequel la limite supérieure de température (Tₒ) est en cas de besoin adaptée dynamiquement.

4. Réseau de bord (4) selon l'une quelconque des revendications précédentes,
dans lequel la différence entre la limite supérieure de température (Tₒ) et la température maximale est d'au moins 30 °C, de préférence d'au moins 50 °C.

5. Réseau de bord (4) selon l'une quelconque des revendications précédentes,
dans lequel la température maximale est d'au moins 80 °C, et en particulier d'au moins 100 °C ou d'au moins 120 °C.

6. Réseau de bord (4) selon l'une quelconque des revendications précédentes,
dans lequel la ligne électrique (12) présente une section de conducteur qui est conçue uniquement pour l'alimentation de la charge (8) à l'intérieur de la plage de travail (As).

7. Réseau de bord (4) selon la revendication précédente,
dans lequel la section de conducteur est inférieure d'au moins le facteur 2 et de préférence d'au moins le facteur 10 à une section de conducteur traditionnelle qui résulterait d'une conception pour la température maximale.

8. Réseau de bord (4) selon l'une quelconque des revendications précédentes,
dans lequel la ligne électrique (12) est conçue pour une charge de courant admissible d'au moins 30 A, de préférence d'au moins 60 A, et encore mieux d'au moins 100 A.

9. Réseau de bord (4) selon l'une quelconque des revendications précédentes,
dans lequel pour ce qui est de la charge électrique (8) il s'agit d'un élément chauffant PTC.

10. Réseau de bord (4) selon l'une quelconque des revendications précédentes,
dans lequel la ligne électrique (12) comporte plusieurs fils d'alimentation, et dans chaque fil d'alimentation est disposé respectivement un élément de commutation électronique destiné à la commutation de la charge électrique (8).

11. Réseau de bord (4) selon l'une quelconque des revendications précédentes,
dans lequel le premier élément de commutation (14) est destiné à la mise en circuit normale de la charge (8) en fonctionnement et l'unité de commande (16) est destinée à bloquer une commutation du premier élément de commutation (14) lorsque la condition externe est en dehors de la plage de travail (As).

12. Réseau de bord (4) selon l'une quelconque des revendications précédentes,
dans lequel en outre un deuxième élément de commutation (20) est disposé et l'unité de commande (16) est conçue de manière à provoquer une séparation de la charge (8) par l'intermédiaire du deuxième élément de commutation (20) lorsque la condition externe se situe en dehors de la plage de travail (A_{B}).

13. Réseau de bord (4) selon l'une quelconque des revendications précédentes,
dans lequel au moins le premier élément de commutation (14) est disposé dans un répartiteur de puissance (22) auquel la ligne électrique (12) est raccordée.

14. Réseau de bord (4) selon l'une quelconque des revendications précédentes,
dans lequel le premier élément de commutation (14) comprend un fusible intégré (24) destiné à la protection de la ligne électrique (12) contre les surintensités ou est disposé avant un tel fusible (24) dans le chemin de charge (10).

15. Réseau de bord (4) selon l'une quelconque des revendications précédentes,
qui comporte un dispositif de mesure (18) destiné à la détection de la condition externe.

16. Réseau de bord (4) selon la revendication précédente,
dans lequel le dispositif de mesure (18) est configuré pour la mesure d'une température actuelle de la ligne électrique (12) aux fins de la détermination de la condition externe.

17. Réseau de bord (4) selon la revendication précédente,
dans lequel le dispositif de mesure (18) est conçu de manière à déterminer la température actuelle par au moins l'une des méthodes suivantes :
- une mesure directe de la température de la ligne électrique (12) et/ou
- une mesure indirecte de la température actuelle de la ligne électrique (12) au moyen de la résistance de ligne,
- une mesure de la température actuelle dans un composant du réseau de bord (4).

18. Procédé pour la conception d'une ligne électrique (12) d'un réseau de bord (4) pour un véhicule (2), le réseau de bord comportant ;
- une source de tension (6) ainsi qu'une charge électrique (8),
- un chemin de charge (10) avec une ligne électrique (12) qui relie la source de tension (6) à la charge électrique (8), ainsi
- qu'un premier élément de commutation (14), qui est disposé dans le chemin de charge (10), destiné à la séparation de la charge électrique (8) d'avec la source de tension (6),
**caractérisé en ce que**
- une plage de travail (A_{B}) d'une condition externe est définie, le réseau de bord du véhicule étant conçu pour une plage de fonctionnement maximale (Aₘₐₓ) de la condition externe, qui est supérieure à la plage de travail (As), la condition externe étant une condition en dehors du réseau de bord, c'est-à-dire qu'il ne s'agit pas d'une propriété de la charge (8) elle-même ni d'une propriété du chemin de charge (12),
- une section de conducteur de la ligne (12) est déterminée en fonction de la plage de travail (A_{B}), de sorte que la ligne électrique (8) est conçue, en ce qui concerne la section de conducteur, uniquement pour un fonctionnement à l'intérieur de la plage de travail (A_{B}) et non à l'intérieur de la plage de fonctionnement maximale (Aₘₐₓ),
- un besoin pour la charge électrique (8) dépend de la condition externe en dehors du réseau de bord,
- pour ce qui est de la charge électrique (8) il s'agit d'un élément chauffant électrique qui sert au chauffage d'un habitacle, d'un siège de véhicule, d'un volant ou d'un carburant du véhicule (2).

19. Procédé selon la revendication précédente,
dans lequel pour ce qui est de la condition externe il s'agit d'une température extérieure et la plage de travail est une plage de température préétablie avec une limite de température supérieure (Tₒ), à laquelle fait suite une autre plage de travail (B_{w}) et la section de conducteur pour l'autre plage de travail (B_{w}) est sous-dimensionnée.
